# EUROPEAN PATENT APPLICATION

(11) **EP 3 993 329 A1**
(43) Date of publication of application: **04.05.2022**
(21) Application number: 19936306.0
(22) Date of filing: 13.08.2019
(51) Int. Cl.: H04L 12/801, H04L 29/06

(54) **NETWORK DATA SCHEDULING METHOD AND EDGE NODE**

(30) Priority: 02.07.2019 CN 201910587509
(71) Applicant: Wangsu Science & Technology Co., Ltd., Shanghai 200030 (CN)
(72) Inventor: WANG, Zhoufeng, Shanghai 200030 (CN); ZHUANG, Xiaochuan, Shanghai 200030 (CN); ZHENG, Jianwen, Shanghai 200030 (CN)
(74) Representative: De Arpe Tejero, Manuel
(86) International application number: PCT/CN2019/100419
(87) International publication number: WO 2021/000379

(57) **Abstract**

Disclosed in the present invention are a network data scheduling method and an edge node, the method being used in the edge node, and the method comprising: reading scheduling strategy information of a target domain name, the scheduling strategy information at least comprising a network scheduling proportion threshold; for a target connection that accesses the target domain name, setting a scheduling identification for the target connection, according to a current network scheduling proportion and the network scheduling proportion threshold under the target domain name; and wherein the scheduling identification is configured to indicate a network scheduling mode that is adopted for a data message transmitted through the target connection. The technical solution provided in the present application can improve the quality of data transmission in the network.

## Description

### TECHNICAL FIELD

The present disclosure relates to a field of Internet technology, and more particularly, relates to a network data scheduling method and an edge node thereof.

### BACKGROUND

With continuous development of Internet technology, the live broadcast industry is on the rise, which not only brings real-time and convenience to users, but also puts forward higher requirements for data transmission and distribution in networks.

At present, a streaming media live broadcast service applied to the live broadcast industry is usually configured for data transmission by using communication protocols such as RTMP, HLS and HTTP FLV which can provide safe and reliable data transmission services. However, quality of the data transmission can be affected when a network environment is jittered and data congestion is occurred in the network. Specifically, communication between an edge node and a center node can be affected by the network with poor quality. The network with poor quality can lead to poor quality of back to source data, so that problems such as playing jam, asynchronous sounds and pictures at the client are occurred.

### SUMMARY

The technical problems to be solved: in view of the shortcomings of the related art, the present disclosure relates to a network data scheduling method and an edge node thereof, which can improve quality of data transmission in the network.

In order to achieve the above purpose, in an aspect, the present disclosure provides a network data scheduling method applied to one or more edge nodes and includes: reading scheduling strategy information of a target domain name, wherein the scheduling strategy information at least includes a network scheduling proportion threshold; for a target connection that accesses the target domain name, setting a scheduling identification for the target connection, according to a current network scheduling proportion and the network scheduling proportion threshold under the target domain name; wherein the scheduling identification is configured to indicate a network scheduling mode that is adopted for a data message transmitted through the target connection.

In order to achieve the above purpose, in another aspect, the present disclosure provides an edge node including: a scheduling strategy information reading unit configured to read scheduling strategy information of a target domain name, wherein the scheduling strategy information at least includes a network scheduling proportion threshold; a scheduling identification setting unit configured to, for a target connection that accesses the target domain name, set a scheduling identification for the target connection, according to a current network scheduling proportion and the network scheduling proportion threshold under the target domain name; wherein the scheduling identification is configured to indicate a network scheduling mode that is adopted for a data message transmitted through the target connection.

In order to achieve the above purpose, in another aspect, the present disclosure provides an edge node including a memory configured to store computer programs and a processor configured to perform the computer programs to implement the above network data scheduling method.

It can be seen from the above that the technical scheme provided in the present disclosure can provide different network scheduling modes for data transmission, so as to ensure the quality of data transmission as much as possible. Specifically, when the data message of the target domain name needs to be transmitted, the edge node can read the scheduling strategy information of the target domain name, and the network scheduling proportion threshold of the target domain name can be indicated in the scheduling strategy information. Subsequently, for the target connection that accesses the target domain name, the edge node can set the corresponding scheduling identification for the target connection according to the current network scheduling proportion under the target domain name and the above network scheduling proportion threshold. In this way, the data message transmitted through the target connection can be scheduled according to the network scheduling mode defined by the scheduling identification. For example, a public network scheduling mode and a self-built network scheduling mode generally with a better network environment thereof, can be selected in practical applications. Therefore, the public network scheduling mode or the self-built network scheduling mode can be flexibly selected to schedule the target connection that access the target domain name based on the scheduling strategy information, and then, different network scheduling modes can minimize influences caused by a single network environment, at the same time, data congestion in the single network environment can be avoided and the quality of data transmission in the network can be improved.

### BRIEF DESCRIPTION OF THE DRAWINGS

In order to more clearly understand the technical solution hereinafter in embodiments of the present disclosure, a brief description to the drawings used in detailed description of embodiments hereinafter is provided thereof. Obviously, the drawings described below are some embodiments of the present disclosure, for one of ordinary skill in the art, other drawings can be obtained according to the drawings below on the premise of no creative work.
FIG. 1 is a diagram of a system according to an embodiment of the present disclosure;
FIG. 2 is a schematic diagram of a network data scheduling method according to an embodiment of the present disclosure;
FIG. 3 is a schematic diagram of steps of caching data and reading data according to an embodiment of the present disclosure;
FIG. 4 is a schematic diagram of executing a frame-skipping strategy according to an embodiment of the present disclosure;
FIG. 5 is a flowchart of writing data to send queue according to an embodiment of the present disclosure;
FIG. 6 is a schematic diagram of an internal structure of an edge node according to an embodiment of the present disclosure; and
FIG. 7 is a schematic diagram of a computer terminal according to an embodiment of the present disclosure.

### DETAILED DESCRIPTION

To make the objectives, technical solutions and advantages of the present disclosure clearer, embodiments of the present disclosure are further described as below in detail with reference to the accompanying drawings.

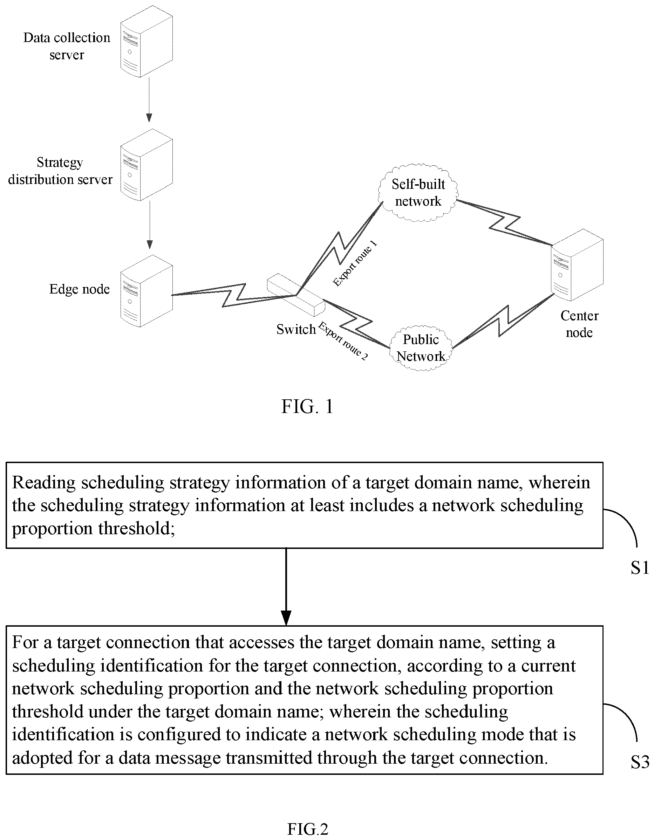

The present disclosure provides a network data scheduling method applied to a system of FIG. 1. The system of FIG. 1 can include an edge node, a center node, a switch and a user client. The user client can be a terminal device used by users and configured to request streaming media data and play the streaming media data. Both the edge node and the center node can be located in a content delivery network (CDN). Wherein, the edge node is an edge server or an edge server cluster that user clients can access nearby, so that the edge node not only can provide its own cached streaming media resources to the user clients, but also can obtain corresponding streaming media resources from the center node by returning to the source, and then provide the streaming media resources that have been obtained to the user clients.

In the present disclosure, data can be transmitted between the edge node and the center node in the CDN through a combination of different networks. For example, the data can be transmitted between the edge node and the center node through a public network and a self-built network. Furthermore, the public network can be a current wide region network, while the self-built network can be a network built by a CDN vendor. Generally, the quality of the self-built network is better than that of the public network. However, an available bandwidth of the self-built network is lower than that of the public network due to construction costs, maintenance costs and other factors. Therefore, in practical applications, a combination of the public network and the self-built network is usually used for data transmission.

The switch can be connected to the edge node and is configured to receive a data message sent from the edge node, and determine whether the data message is transmitted through the public network or the self-built network according to contents of the data message.

It should be noted that, in practical applications, the above system can also include more components such as a data collection server and a strategy distribution server. Furthermore, the data collection server is configured to collect network parameters such as a bandwidth required by each domain name, and a bandwidth available for the self-built network, and then report the collected network parameters to the strategy distribution server. The strategy distribution server is configured to generate a scheduling strategy file for each domain name according to the received network parameters and control instructions input by managers, and distribute the generated scheduling strategy file to the edge node.

Referring to FIG. 2, a network data scheduling method of the present disclosure is applied to the above edge node, and can include the following steps.

Step SI, reading scheduling strategy information of a target domain name, wherein the scheduling strategy information at least includes a network scheduling proportion threshold.

In an embodiment of the present disclosure, for different domain names, the strategy distribution server can be configured to generate different scheduling strategy files. Of course, in practical applications, the strategy distribution server can also be configured to generate only one scheduling strategy file that includes the scheduling strategy information corresponding to different domain names. After the edge node receives the scheduling strategy file distributed by the strategy distribution server, the edge node is configured to parse contents of the scheduling strategy file. Specifically, the scheduling strategy file can generally include a customer domain name, a preset IP address segment, a network scheduling proportion threshold of each domain name and other parameters. In detail, the customer domain name can be a domain name that needs to combine the public network and the self-built network for data transmission, the preset IP address segment can be a collection of IP addresses resolved by the customer domain names, and the network scheduling proportion threshold can be a preset percentage that is used to limit an upper limit of the proportion of a certain network scheduling mode. The edge node can read the scheduling strategy information of the target domain name by parsing the scheduling strategy file. The target domain name can be a domain name that is currently accessed by the user client, or a domain name corresponding to a connection that is currently established by the edge node.

In practical applications, the network scheduling proportion threshold can be a public network scheduling proportion threshold, of course, in some application scenarios, the network scheduling proportion threshold can also be a self-built network scheduling proportion threshold, which is not limited here. The present disclosure can be described below through the public network scheduling proportional threshold, and an implementation of the self-built network scheduling proportional threshold can be referred to that of the public network scheduling proportional threshold.

In an embodiment of the present disclosure, for different customer domain names, the network scheduling proportion thresholds that are set, can also be different. For example, the network scheduling proportion threshold of Baidu can be set 50%, while, the network scheduling proportion threshold of Tencent can be set 30%. Taking the public network scheduling proportion threshold of the target domain name as an example, the public network scheduling proportion threshold can be limited to the upper limit that the number of connections for data transmission through the public network are in the total number of connections under the target domain name. For example, the public network scheduling proportion threshold of the target domain name is 50%, at this time, there are 10 connections under the target domain name, and 4 connections are configured to transmit data through the public network, in this way, a current public network scheduling proportion of the target domain name is 40%, which does not exceed the upper limit of 50%.

Step S3, for a target connection that accesses the target domain name, setting a scheduling identification for the target connection, according to a current network scheduling proportion and the network scheduling proportion threshold under the target domain name; wherein the scheduling identification is configured to indicate a network scheduling mode that is adopted for a data message transmitted through the target connection.

In an embodiment of the present disclosure, after the user client accesses the edge node nearby, a request that accesses the target domain name can be sent to the edge node. In response to the request, the target connection for the target domain name can be established between the edge node and the center node. Subsequently, data transmission can be occurred by the target connection that is established between the center node and the edge node.

In practical applications, the request that accesses the target domain name, sent by the user client can be received by a domain name resolution server and resolved into a corresponding IP address by the domain name resolution server. The IP address can be provided by the domain name resolution server to the edge node that is accessed by the user client. In this way, the IP address can be determined as an IP address corresponding to the target connection.

After the IP address corresponding to the target connection is determined by the edge node, it can be determined whether the IP address is located in the above preset IP address segment. When the IP address is located in the preset IP address segment, it is indicated that the data message of the target domain name needs to be transmitted through the combination of the public network and the self-built network. At this time, the scheduling identification for the target connection can be set, according to the current network scheduling proportion and the network scheduling proportion threshold under the target domain name, so as to further determine which network scheduling mode should be used to schedule the target connection through the set scheduling identification. When the IP address isn't located in the preset IP address segment, it is indicated that the data message of the target domain name is transmitted only through the public network, rather than the combination of the public network and the self-built network.

In an embodiment of the present disclosure, the network scheduling mode at least includes a first scheduling mode and a second scheduling mode different from the first scheduling mode, such as a public network scheduling mode and a self-built network scheduling mode. With continuous progress of technologies and continuous increase of application scenarios, more network scheduling modes can be produced. The present disclosure is described only by taking the first scheduling mode and the second scheduling mode as examples, and the scheme of more scheduling modes can also be analogized, which is not be repeated here.

Generally, the first scheduling mode mentioned above can be a default scheduling mode, while, the second scheduling mode can be a scheduling mode set to achieve a specific function or to improve the quality of data transmission. For example, the above public network scheduling mode can be taken as the first scheduling mode, and data can be scheduled to the public network by default. However, security and quality of data transmitted in the public network can be affected by various factors. The self-built network scheduling mode can be taken as the second scheduling mode, and data can be scheduled to the self-built network under a control of routing strategy. The network environment of the self-built network is usually good, which can improve the security and stability of data transmission, however, due to cost considerations, the network bandwidth of the self-built network is usually small, so that not all data can be scheduled to the self-built network. In this way, the data can be selectively scheduled through two or more network scheduling modes with the same service quality, therefore, not only the data can be timely scheduled, but also transmission stability of some important data can be ensured.

In an embodiment of the present disclosure, when setting the scheduling identification for the target connection, the current network scheduling proportion under the target domain name can be first identified. Taking the public network scheduling proportion as an example, a current public network scheduling proportion can be a proportion that connections using the public network scheduling mode under the target domain name are in a total number of connections. It should be noted that, when the current network scheduling proportion under the target domain name is identified, the above target connection is not included in the total number of connections under the target domain name, but as a connection whose network scheduling mode is not determined yet.

In an embodiment of the present disclosure, when determining which scheduling mode should be used for the target connection, it can first assume that the target connection is scheduled according to the first scheduling mode. In this case, the proportion of the number of connections scheduled according to the first scheduling mode in the total number of connections can be calculated based on the current network scheduling proportion. For example, it is assumed that 4 connections under the target domain name, in addition to the target connection, are currently scheduled by using the public network scheduling mode, and 6 connections are scheduled by using the self-built network scheduling mode, therefore, the current public network scheduling proportion is 40%. In this case, if the target connection is scheduled based on the public network scheduling mode, 5 connections that are scheduled based on the public network scheduling mode, and the total number of connections is 11. The proportion of the number of connections that are scheduled based on the public network scheduling mode in the total number of connections is calculated about 45.45%.

In an embodiment of the present disclosure, the calculated proportion can be further compared with the network scheduling proportion threshold of the target domain name. When the calculated proportion is less than or equal to the network scheduling proportion threshold, it means that when the target connection is scheduled according to the first scheduling mode, the calculated proportion does not exceed the upper limit of the proportion limited by the network scheduling proportion threshold. At this time, the scheduling identification for the target connection that is scheduled according to the first scheduling mode can be set. When the calculated proportion is greater than the network scheduling proportion threshold, it means that the upper limit of the proportion limited by the network scheduling proportion threshold has been exceeded when scheduling the target connection according to the first scheduling mode, therefore, it is necessary to set the scheduling identification for the target connection that is scheduled according to the second scheduling mode.

In practical applications, the above scheduling identification can be obtained from specifying fields in the data message. Specifically, the above scheduling identification can be implemented through a differentiated services code point (DSCP) field in an IP packet. The DSCP can be assigned differently according to different network scheduling modes. For example, when the scheduling identification is scheduled according to the first scheduling mode, an assignment of the DSCP can be 0. When the scheduling identification is scheduled according to the second scheduling mode, an assignment of the DSCP can be 1. Of course, on the premise of understanding the technical essence of the present disclosure, one of ordinary skill in the art can think of other ways to obtain the above scheduling identification, but as long as the role of the scheduling identification is consistent with or similar to that of the scheduling identification of the present disclosure, it should fall into the protection scope of the present disclosure.

In practical applications, the network scheduling proportion threshold can be subdivided into an upstream proportion threshold and a downstream proportion threshold. The term "upstream" means that the edge node sends the data message to the center node, while the term "downstream" means that the center node sends the data message to the edge node. Between the center node and the edge node, the upstream data message can be transmitted through upstream connections, and the downstream data message can be transmitted through downstream connections. Specifically, according to the above method, not only the upstream proportion threshold can be used as a reference value to determine which network scheduling mode should be adopted for the upstream connections, but also the downstream proportion threshold can be used as the reference value to determine which network scheduling mode should be adopted for the downstream connections.

In an embodiment of the present disclosure, scheduling identifications respectively for the upstream connections and the downstream connections can be set in different ways. Specifically, when the target connection is the upstream connection between the edge node and the center node, the scheduling identification can be set in a specified field of the data message that is sent from the edge node to the center node. The data message sent from the edge node to the center node can be an IP packet, and the specified field can be a DSCP field in the IP packet, so that a corresponding scheduling identification can be set in the IP packet by setting an assignment of the DSCP field.

In an embodiment of the present disclosure, when the target connection is the downstream connection between the edge node and the center node, the edge node can send an HTTP request to the center node, and a subsequent center node can feed back a response packet according to the received HTTP request. In the HTTP request, the above DSCP field is usually absent, in this case, a custom field can be added to the HTTP request that is configured to carry the scheduling identification. In this way, the custom field for carrying the scheduling identification can be added to the request packet sent from the edge node to the center node. For example, the custom field can be X-DSCP: 1, which is indicated that downstream data transmission should be scheduled in the second scheduling mode. After contents in the custom field is parsed by the center node, the scheduling identification can be set in the specified field of the response packet that is sent to the edge node. The response packet can be the IP packet because the IP packet originally carries DSCP fields, the scheduling identification can be set directly in the DSCP fields of the response packet by assignments. That is to say, after the center node parses the contents of X-DSCP: 1, contents of DSCP: 1 can be set in a feedback response packet.

In an embodiment of the present disclosure, the IP packet transmitted between the center node and the edge node can be transferred through the switch. By analyzing the assignment of the DSCP in the IP packet, the switch can be configured to determine which network scheduling mode is applied for a scheduling current IP packet.

In an embodiment of the present disclosure, when the target connection is disconnected, the edge node is needed to recalculate the current network scheduling proportion according to the network scheduling mode of each connection which is currently not disconnected yet. For example, when the target connection is included, 5 connections are scheduled by using the public network scheduling mode, and 5 connections are scheduled by using the self-built network scheduling mode, so that the public network scheduling proportion is 50%. After the target connection is disconnected, 4 connections are scheduled by using the public network scheduling mode, and 5 connections are scheduled by using the self-built network scheduling mode, so that the public network scheduling proportion that is recalculated is about 44.44%.

It can be seen from the above that data transmission between the center node and the edge node can be carried out through different network scheduling modes, which can avoid all data transmission through the public network, therefore, it can not only take advantage of high quality of the self-built network, but also avoid data congestion, which greatly improves the quality of back to the source data.

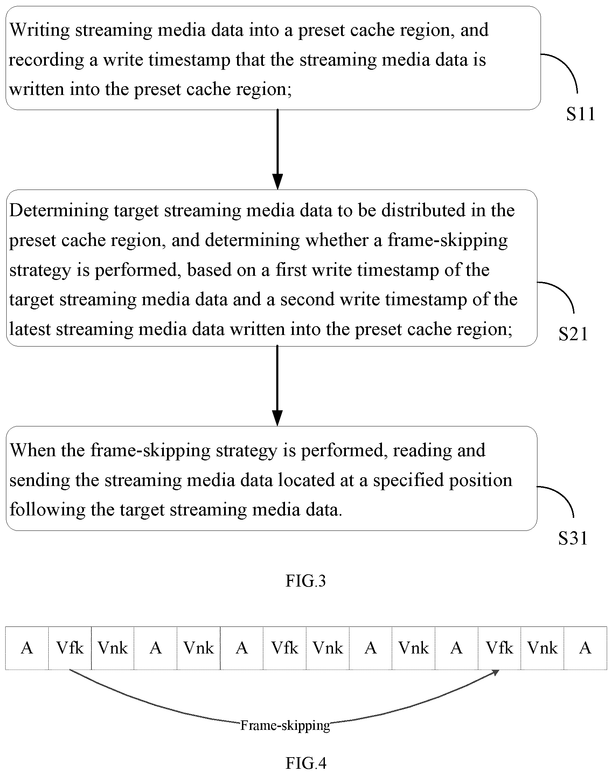

In an embodiment of the present disclosure, in order to solve the problem that the live video cannot maintain high real-time performance, improvements in data caching and data reading can be obtained by following steps shown in FIG. 3.

Step S11, writing streaming media data into a preset cache region, and recording a write timestamp that the streaming media data is written into the preset cache region.

In an embodiment of the present disclosure, the edge node can include a cache module (cache) and a service module (server). The cache module includes the preset cache region which can continuously write the streaming media data to be distributed, and the service module can read the streaming media data from the cache module and write the streaming media data that is read into the send queue, so that the streaming media data that is read can be sent out in turn.

Specifically, when the edge node writes the streaming media data into the preset cache region in the cache module, the write timestamp that the streaming media data is written into the preset cache region can be recorded, and key frame information of the streaming media data can also be recorded. The write timestamp can be a system time point of the edge node that the streaming media data is written into, and the key frame information can be configured to represent an offset that a key frame is in the streaming media data.

Step S21, determining target streaming media data to be distributed in the preset cache region, and determining whether a frame-skipping strategy is performed, based on a first write timestamp of the target streaming media data and a second write timestamp of the latest streaming media data written into the preset cache region.

In an embodiment of the present disclosure, the service module can continuously read the streaming media data from the preset cache region, and the streaming media data currently read by the service module can be used as a target streaming media data to be distributed. At this time, in order to ensure that the distributed streaming media data has high real-time performance, the first write timestamp of the target streaming media data and the second write timestamp of the latest streaming media data written into the preset cache region can be identified, and the first write timestamp can be compared with the second write timestamp. When a time interval between the first write timestamp and the second write timestamp is greater than a preset threshold, it is indicated that an interval between the streaming media data pushed to the user client and the streaming media data currently uploaded by an anchor is longer. At this time, the frame-skipping strategy can be performed to ensure the real-time performance of the live video. On the contrary, when the time interval between the first write timestamp and the second write timestamp is less than or equal to the preset threshold, it is indicated that the interval between the streaming media data pushed to the user client and the streaming media data currently uploaded by the anchor is within a normal range, and the frame-skipping strategy will not be performed at this time.

Step S31, when the frame-skipping strategy is performed, reading and sending the streaming media data located at a specified position following the target streaming media data.

In an embodiment of the present disclosure, when the frame-skipping strategy is performed, the service module can directly read and send the streaming media data after the target streaming media data by starting from the target streaming media data and skipping a part of the streaming media data. In this way, by catching up with the progress, the streaming media data that are sent out can be close to the latest streaming media data that is written into the preset cache region, so as to ensure the real-time performance of live broadcast.

Specifically, referring to FIG. 4, the streaming media data can be divided according to groups of pictures (GOP). Audio frames, video key frames and non -video key frames can be included in a group of pictures. For example, in FIG. 4, A represents the audio frame, Vfk represents the video key frame, and Vnk represents the non-video key frame. When performing the frame-skipping strategy, a specified number of groups of pictures can be skipped backward from the key frame (video key frame) in the target streaming media data, and the streaming media data after skipping the specified number of groups of pictures can be taken as the streaming media data at the specified position. Specifically, referring to FIG. 4, starting from the key frame in the target streaming media data, two groups of pictures can be skipped backward, and the streaming media data can be transmitted outward from a second key frame that is after the key frame in the target streaming media data.

In an embodiment of the present disclosure, after the service module reads the streaming media data from the cache module, the streaming media data that is read can be written into the send queue. The streaming media data in the send queue can be sent to the target connections in turn, and the streaming media data can be distributed outward through the target connections.

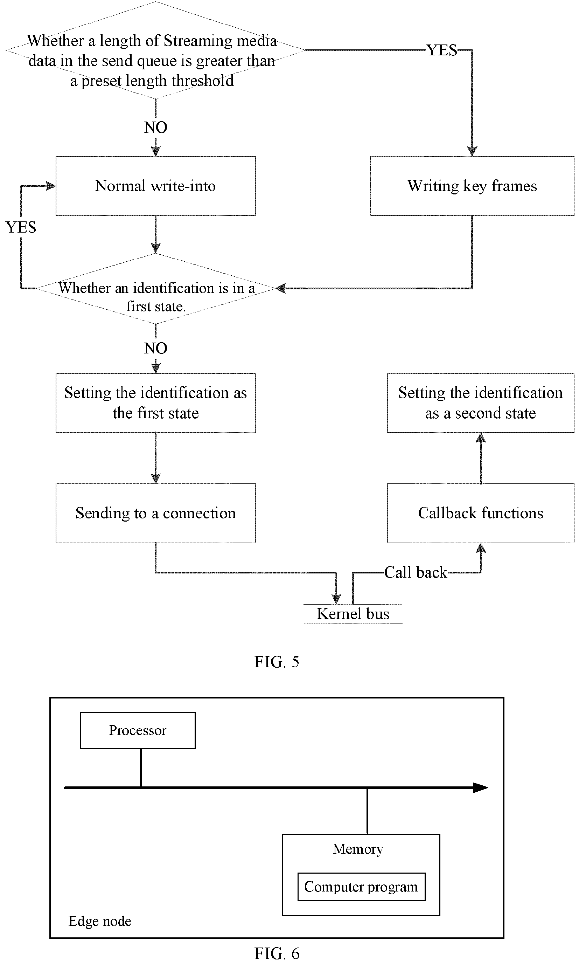

Referring to FIG. 5, when the service module needs to write the streaming media data into the send queue, whether a length of the streaming media data in the send queue is greater than a preset length threshold can be determined. The preset length threshold can be taken as a critical value whether the data in the send queue is congested or not. When the length of the streaming media data in the send queue is greater than the preset length threshold, it is indicated that data congestion is occurred at present, if all the read streaming media data is written into the send queue, data congestion will be further aggravated. At this time, only the key frame in the streaming media data that is currently read can be written into the transmission queue, and all non-key frames can be discarded. Since the key frame includes a frame of a complete picture, it can not only preserve all contents of video frames, but also reduce the problem of data congestion. When the length of the streaming media data in the send queue is less than or equal to the preset length threshold, it is indicated that there is no data congestion at present, and all contents of the streaming media data that is currently read can be written into the send queue.

In an embodiment of the present disclosure, after the streaming media data that is currently read is written into the send queue, a current state of the identification indicating that the bus is busy can be identified. In practical applications, the identification indicating that the bus is busy can be a vio busy identification. When the identification is in a first state, it is indicated that the streaming media data currently located in the send queue is not sent out; when the identification is in a second state, it is indicated that the streaming media data currently in the send queue needs to be sent out. The first state can be true and the second state can be false. In this way, when the current state of the identification is identified as the second state, it is indicated that the streaming media data currently written into the send queue should be sent out. At this time, the identification indicating that the bus is busy can be set as the first state, and the streaming media data that is currently read can be written into the target connection. The purpose is that, on the one hand, the stream media data that is currently read can be sent out through the target connection; on the other hand, by setting the identification as the first state, the data in the send queue can be avoided from being frequently sent out with small data of a short length. In this way, the identification indicating that the bus is busy can be set as the first state, whenever the streaming media data is written into the send queue. In addition, in order to avoid infinite accumulation of data in the send queue, after the target connection completely transmits the streaming media data to be distributed, an asynchronous callback success notification can be passed through a callback function. After the service module receives the asynchronous callback success notification from the target connection, the service module is configured to set the identification indicating that the bus is busy as the second state, and then the streaming media data in the send queue can be sent out. In this way, the identification representing the busy bus can be switched back and forth between the two states through the asynchronous processing of writing data and connection callback, which can not only ensure that the streaming media data in the send queue can be sent out normally, but also avoid sending data with small data amount frequently, and improve the stability of data transmission.

An edge node according to an embodiment of the present disclosure is provided. The edge node includes:
a scheduling strategy information reading unit configured to read scheduling strategy information of a target domain name, the scheduling strategy information at least including a network scheduling proportion threshold;
a scheduling identification setting unit configured to, for a target connection that accesses the target domain name, set a scheduling identification for the target connection, according to a current network scheduling proportion and the network scheduling proportion threshold under the target domain name; wherein the scheduling identification is configured to indicate a network scheduling mode that is adopted for a data message transmitted through the target connection.

In an embodiment of the present disclosure, the edge node further includes:
a data writing unit configured to write streaming media data into a preset cache region, and record a write timestamp that the streaming media data is written into the preset cache region;
a strategy determining unit configured to determine target streaming media data to be distributed in the preset cache region, and determine whether a frame-skipping strategy is performed, based on a first write timestamp of the target streaming media data and a second write timestamp of the latest streaming media data written into the preset cache region; and
a data sending unit configured to read and send the streaming media data located at a specified position following the target streaming media data, when the frame-skipping strategy is performed.

In an embodiment of the present disclosure, the edge node further includes:
a status setting unit configured to write the streaming media data that is currently read into the send queue, and set an identification indicating that a bus is busy, as a first state; wherein the first state indicates that the streaming media data currently located in the send queue is not sent out; and
a status resetting unit configured to set the identification indicating that the bus is busy, as a second state, after receiving the asynchronous callback success notification, and send out the streaming media data in the send queue.

Referring to FIG. 6, an edge node according to another embodiment of the present disclosure is provided. The edge node includes a memory configured to store computer programs and a processor configured to perform the computer programs to implement the above network data scheduling method.

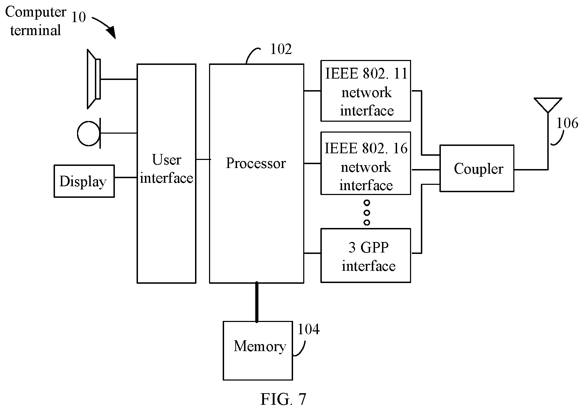

Referring to FIG. 7, in the present disclosure, the technical scheme of the above embodiments can be applied to a computer terminal 10 as shown in FIG. 7. The computer terminal 10 can include one or more (only one is shown in FIG. 7) processors 102, (the processor 102 can include, but is not limited to, a microprocessor MCU or a processing device such as a programmable logic device FPGA), a memory 104 configured to store data therein, and a transmission module 106 with communication functions. It can be understood by one of ordinary skill in the art that the structure shown in FIG. 7 is only schematic and does not limit the above electronic device. For example, the computer terminal 10 can also include more or fewer components than that of being shown in FIG. 7, or have a different configuration from that of being shown in FIG. 7.

The memory 104 is configured to store software programs and modules of application software, and the processor 102 is configured to execute various functional applications and data processing by performing the software programs and the modules stored in the memory 104. The memory 104 can include a high-speed random access memory and a nonvolatile memory such as one or more magnetic storage devices, flash memories, or other nonvolatile solid-state memories. In some embodiments of the present disclosure, the memory 104 can further include a storage device that is remotely set relative to the processor 102 and connected to the computer terminal 10 through networks. Examples of the above networks include, but are not limited to, an Internet, an intranet, a LAN, a mobile communication network and combinations thereof.

The transmission device 106 is configured to receive or transmit data via the network. A specific example of the network described above can include a wireless network provided by a communication provider of the computer terminal 10. In an embodiment of the present disclosure, the transmission device 106 includes a network interface controller (NIC) connected with other network devices through a base station to communicate with the Internet. The transmission device 106 also can be a radio frequency (RF) module wirelessly communication with the Internet.

It can be seen from the above that the technical scheme provided in the present disclosure can provide different network scheduling modes for data transmission, so as to ensure the quality of data transmission as much as possible. Specifically, when the data message of the target domain name needs to be transmitted, the edge node can read the scheduling strategy information of the target domain name, and the network scheduling proportion threshold of the target domain name can be indicated in the scheduling strategy information. Subsequently, for the target connection that accesses the target domain name, the edge node can set the corresponding scheduling identification for the target connection according to the current network scheduling proportion under the target domain name and the above network scheduling proportion threshold. In this way, the data message transmitted through the target connection can be scheduled according to the network scheduling mode defined by the scheduling identification. For example, the public network scheduling mode and the self-built network scheduling mode generally with a better network environment thereof, can be selected in practical applications. Therefore, the public network scheduling mode or the self-built network scheduling mode can be flexibly selected to schedule the target connection that accesses the target domain name based on the scheduling strategy information, and then, different network scheduling modes can minimize influences caused by a single network environment, at the same time, data congestion in the single network environment can be avoided and the quality of data transmission in the network can be improved.

Each embodiment in the specification is described in a progressive manner, the same and similar parts of each embodiment can be referred to each other. Each embodiment focuses on differences from other embodiments. In particular, embodiments of the edge nodes can be explained with reference to introductions of the embodiments of the above method.

Through the description of the above embodiments, one of ordinary skill in the art can clearly understand that the various embodiments can be implemented by means of software plus a necessary general hardware platform, and of course, can also be implemented by hardware. Based on such understanding, the above-described technical solutions can be embodied in the form of software products in essence or in the form of software products, which can be stored in a computer-readable storage medium such as ROM/RAM, magnetic discs, optical discs, etc., and include a series of instructions for causing a computer device (which can be a personal computer, a server, or a network device, etc.) to perform the methods described in various embodiments or portions of the embodiments.

Although the present disclosure has been described as above with reference to preferred embodiments, these embodiments are not intended to limit the present disclosure. Any modification, equivalent replacement and improvement made within the spirit and principle of the present disclosure shall fall into the protection scope of the present disclosure.

## Claims

1. A network data scheduling method applied to an edge node, the method comprising:
reading scheduling strategy information of a target domain name, the scheduling strategy information at least comprising a network scheduling proportion threshold;
for a target connection that accesses the target domain name, setting a scheduling identification for the target connection, according to a current network scheduling proportion and the network scheduling proportion threshold under the target domain name; and wherein
the scheduling identification is configured to indicate a network scheduling mode that is adopted for a data message transmitted through the target connection.

2. The method as claimed in claim 1, wherein the network scheduling mode at least comprises a first scheduling mode and a second scheduling mode different from the first scheduling mode;
the step of setting a scheduling identification for the target connection, according to the current network scheduling proportion and the network scheduling proportion threshold under the target domain name comprising:
calculating a proportion of the number of connections scheduled according to the first scheduling mode, in a total number of connections, on the basis of the current network scheduling proportion, in the case that the target connection is scheduled according to the first scheduling mode;
when the calculated proportion is less than or equal to the network scheduling proportion threshold, setting the scheduling identification for the target connection that is scheduled according to the first scheduling mode; and
when the calculated proportion is greater than the network scheduling proportion threshold, setting the scheduling identification for the target connection that is scheduled according to the second scheduling mode.

3. The method as claimed in claim 1, wherein the scheduling strategy information further comprises a preset IP address segment, before setting the scheduling identification for the target connection, according to the current network scheduling proportion and the network scheduling proportion threshold under the target domain name, the method further comprising:
determining an IP address corresponding to the target connection, and determining whether the IP address is located in the preset IP address segment;
when the IP address is located in the preset IP address segment, setting the scheduling identification for the target connection, according to the current network scheduling proportion and the network scheduling proportion threshold under the target domain name.

4. The method as claimed in claim 1, wherein after setting the scheduling identification for the target connection, the method further comprises:
when the target connection is an upstream connection between the edge node and a center node, setting the scheduling identification in a specified field of the data message that is sent from the edge node to the center node;
when the target connection is a downstream connection between the edge node and a center node, adding a custom field for carrying the scheduling identification in a request packet that is sent from the edge node to the center node, so as to set the scheduling identification in a specified field of a response packet that is sent from the edge node to the center node, after contents of the custom field are parsed by the center node.

5. The method as claimed in claim 1, wherein the method further comprises:
recalculating the current network scheduling proportion according to the network scheduling mode of each connection which is currently not disconnected yet, after the target connection is disconnected.

6. The method as claimed in claim 1, wherein the method further comprises:
writing streaming media data into a preset cache region, and recording a write timestamp that the streaming media data is written into the preset cache region;
determining target streaming media data to be distributed in the preset cache region, and determining whether a frame-skipping strategy is performed, based on a first write timestamp of the target streaming media data and a second write timestamp of the latest streaming media data written into the preset cache region; and
when the frame-skipping strategy is performed, reading and sending the streaming media data located at a specified position following the target streaming media data.

7. The method as claimed in claim 6, wherein the step of determining whether the frame-skipping strategy is performed comprises:
comparing the first write timestamp with the second write timestamp, when a time interval between the first write timestamp and the second write timestamp is greater than a preset threshold, determining to perform the frame-skipping strategy; when the time interval between the first write timestamp and the second write timestamp is less than or equal to the preset threshold, determining not to perform the frame-skipping strategy.

8. The method as claimed in claim 6, wherein the streaming media data at the specified position is determined as follows:
skipping a specified number of groups of pictures backward from a key frame in the target streaming media data, and taking the streaming media data after skipping the specified number of groups of pictures as the streaming media data at the specified position.

9. The method as claimed in claim 1 or claim 6, wherein the method further comprises:
writing streaming media data that is currently read into the send queue, and setting the identification indicating that the bus is busy, as a first state; wherein the first state indicates that the streaming media data that is currently located in the send queue is not sent out; and
setting the identification indicating that the bus is busy, as a second state, and sending out the streaming media data in the send queue, after receiving an asynchronous callback success notification.

10. The method as claimed in claim 9, wherein before writing the streaming media data that is currently read into the send queue, the method further comprises:
determining whether a length of the streaming media data in the send queue is greater than a preset length threshold, when the length of the streaming media data in the send queue is greater than the preset length threshold, only writing a key frame in the streaming media data that is currently read into the send queue; when the length of the streaming media data in the send queue is less than or equal to the preset length threshold, writing the streaming media data that is currently read into the send queue.

11. The method as claimed in claim 9, wherein after writing the streaming media data that is currently read into the send queue, the method further comprises:
identifying a current state of the identification indicating that the bus is busy;
when the current state of the identification indicating that the bus is busy is in the second state, setting the identification indicating that the bus is busy as the first state, and writing the streaming media data that is currently read into the target connection.

12. An edge node comprising:
a scheduling strategy information reading unit configured to read scheduling strategy information of a target domain name, the scheduling strategy information at least comprising a network scheduling proportion threshold;
a scheduling identification setting unit configured to, for a target connection that accesses the target domain name, set a scheduling identification for the target connection, according to a current network scheduling proportion and the network scheduling proportion threshold under the target domain name; wherein the scheduling identification is configured to indicate a network scheduling mode that is adopted for a data message transmitted through the target connection.

13. The edge node as claimed in claim 12, wherein the edge node further comprises:
a data writing unit configured to write streaming media data into a preset cache region, and record a write timestamp that the streaming media data is written into the preset cache region;
a strategy determining unit configured to determine target streaming media data to be distributed in the preset cache region, and determine whether a frame-skipping strategy is performed, based on a first write timestamp of the target streaming media data and a second write timestamp of the latest streaming media data written into the preset cache region; and
a data sending unit configured to read and send the streaming media data located at a specified position following the target streaming media data, when the frame-skipping strategy is performed.

14. The edge node as claimed in claim 12 or claim 13, wherein the edge node further comprises:
a status setting unit configured to write streaming media data that is currently read into the send queue, and set the identification indicating that the bus is busy, as a first state; wherein the first state indicates that the streaming media data that is currently located in the send queue is not sent out; and
a status resetting unit configured to set the identification indicating that the bus is busy, as a second state, after receiving an asynchronous callback success notification, and send out the streaming media data in the send queue.

15. An edge node comprising a memory configured to store computer programs and a processor configured to perform the computer programs to implement the network data scheduling method as claimed in any one of claims 1-11.
